# DEMANDE DE BREVET EUROPEEN

(11) **EP 1 258 382 A1**
(43) Date de publication de la demande: **20.11.2002**
(21) Numéro de dépôt: 02356026.1
(22) Date de dépôt: 13.02.2002
(51) Int. Cl.: B60K 25/02, F02B 67/06

(54) **Kit formant source de puissance hydraulique et moteur de vehicule equipe d'un tel kit**

(30) Priorité: 15.05.2001 FR 0106399
(71) Demandeur: Arci Rhone Alpes Ateliers de Reparations et de Constructions Industrielles, 38300 Bourgoin Jaillieu (FR)
(72) Inventeur: Levis, Christian, Lucien, Alphonse, 38300 Maubec (FR)
(74) Mandataire: Myon, Gérard Jean-Pierre

(57) **Abrégé**

Ce kit (20), apte à être monté sur un moteur de véhicule automobile, comprend :
- un support (29) à section globalement en forme de L apte à être monté sur le moteur, à la place d'un support de poulie folle ;
- un embrayage électro-magnétique (22) monté sur le support (29) et
- une pompe hydraulique (25) montée sur le support (29) et accouplée à l'embrayage (22) à travers une ouverture (294) ménagée dans un bras (291) du support (29).

## Description

L'invention a trait à un kit formant source hydraulique et à un moteur, notamment de véhicule utilitaire léger, équipé un tel kit.

Dans le domaine des véhicules utilitaires, il est connu de prévoir une prise de mouvement en sortie de la boîte de vitesses d'un véhicule pour l'accouplement d'une pompe hydraulique destinée à constituer une source d'énergie pour un ou plusieurs équipements auxiliaires, tels qu'une grue, un hayon, une benne basculante, un groupe électrogène, un pistolet de peinture à régulateur ou une moto-pompe.

Cependant certains véhicules utilitaires, et tout particulièrement des véhicules utilitaires légers, ne sont pas équipés d'une telle prise sur leur boîte de vitesses. Dans ce cas, il est connu d'utiliser, un groupe électro-pompe fonctionnant à partir d'une source d'énergie constituée par la batterie du véhicule, voire son alternateur. Un tel groupe électro-pompe est nettement moins puissant qu'une pompe hydraulique et nettement moins fiable. En pratique, il s'agit d'un matériel qui peut être utilisé pendant une courte durée, de l'ordre d'une minute, à la différence d'une pompe hydraulique qui peut tourner sans difficultés pendant plusieurs heures. Enfin, un groupe électro-pompe a tendance à solliciter de façon exagérée la batterie et/ou l'alternateur du véhicule, d'où une usure prématurée de ces composants.

C'est à ces inconvénients qu'entend plus particulièrement remédier l'invention en proposant un kit pouvant équiper un véhicule dépourvu de prise de mouvement en sortie de boîte de vitesses et susceptible de constituer une source d'énergie hydraulique pour des équipements auxiliaires, tels que ceux précédemment mentionnés ou d'autres.

Dans cet esprit, l'invention concerne un kit formant source de puissance hydraulique apte à être monté sur un moteur de véhicule automobile, tel qu'un véhicule utilitaire léger, qui comprend :
- un support à section globalement en forme de L apte à être monté sur le moteur à la place d'un support de poulie folle ;
- un embrayage électro-magnétique monté sur ce support et
- une pompe hydraulique montée sur ce support et accouplée à l'embrayage à travers une ouverture ménagée dans un bras de ce support.

Grâce à l'invention, on peut substituer le kit formant source de puissance hydraulique à une poulie folle de renvoi se trouvant classiquement dans un moteur à combustion interne, tel qu'un moteur connu sous la référence G9T équipant les véhicules utilitaires Renault. On peut ainsi utiliser l'énergie cinétique, transmise par la courroie d'entraînement de l'alternateur et/ou de la pompe de direction du moteur, pour entraîner en cas de besoin la pompe hydraulique du kit, ce qui permet d'alimenter en fluide hydraulique un équipement auxiliaire.

Selon des aspects avantageux mais non obligatoires de l'invention, le kit incorpore une ou plusieurs des caractéristiques suivantes :
- L'embrayage est pourvu d'une poulie à profil en V multiple apte à coopérer avec une courroie à profil dit « poly V ».
- Le support comprend un premier bras dans lequel est ménagée l'ouverture permettant de relier l'embrayage et la pompe hydraulique et un second bras, globalement perpendiculaire au premier, dans l'épaisseur duquel sont ménagés des perçages de passage de vis de fixation du support sur le moteur. De façon avantageuse, un premier perçage est ménagé dans une zone de jonction entre les premier et second bras précités, alors que le second perçage est ménagé dans une zone d'extrémité de ce bras. On peut prévoir qu'un perçage de passage d'une autre vis de fixation est ménagée dans une zone d'extrémité du premier bras. En outre, la ou les zones d'extrémités, dans laquelle ou lesquelles sont ménagés ces perçages, peut ou peuvent avoir une épaisseur supérieure à celle du bras correspondant dans sa partie principale.
- Le support est percé de taraudages de réception de vis de montage de la pompe et de perçages de passage de vis de montage de l'embrayage.
- L'embrayage est monté sur le support, de telle sorte que ses câbles d'alimentation électrique passent au voisinage d'une zone de jonction entre deux bras du support. Ainsi, ces câbles ne risquent pas d'interférer avec les pièces en mouvement du moteur et ne risquent donc pas d'être arrachés.
- Le kit comprend en outre une courroie d'entraînement d'une poulie de l'embrayage apte à être montée à la place d'une courroie de transmission du moteur. Cette courroie est adaptée à la longueur du trajet que doit suivre la courroie d'entraînement du moteur, longueur qui est modifiée du fait de la mise en place de l'embrayage électro-magnétique dont la poulie peut avoir un diamètre différent de la poulie folle initialement en place sur le moteur.

L'invention concerne enfin un moteur de véhicule automobile, notamment de véhicule utilitaire léger, qui est équipé d'un kit formant source de puissance hydraulique tel que précédemment décrit. Un tel moteur permet d'équiper le véhicule d'équipements auxiliaires ou accessoires, sans avoir recours à un groupe électro-pompe peu fiable et peu puissant.

L'invention sera mieux comprise et d'autres avantages de celle-ci apparaîtront plus clairement à la lumière de la description qui va suivre d'un mode de réalisation d'un kit et d'un moteur conformes à son principe, donnée uniquement à titre d'exemple et faite en référence aux dessins annexés dans lesquels :
- la figure 1 est une vue de face partielle d'un moteur sur lequel peut être monté le kit de l'invention ;
- la figure 2 est une vue de face partielle du moteur de la figure 1 équipé du kit de l'invention ;
- la figure 3 est une vue en perspective éclatée du kit équipant le moteur de la figure 2 et

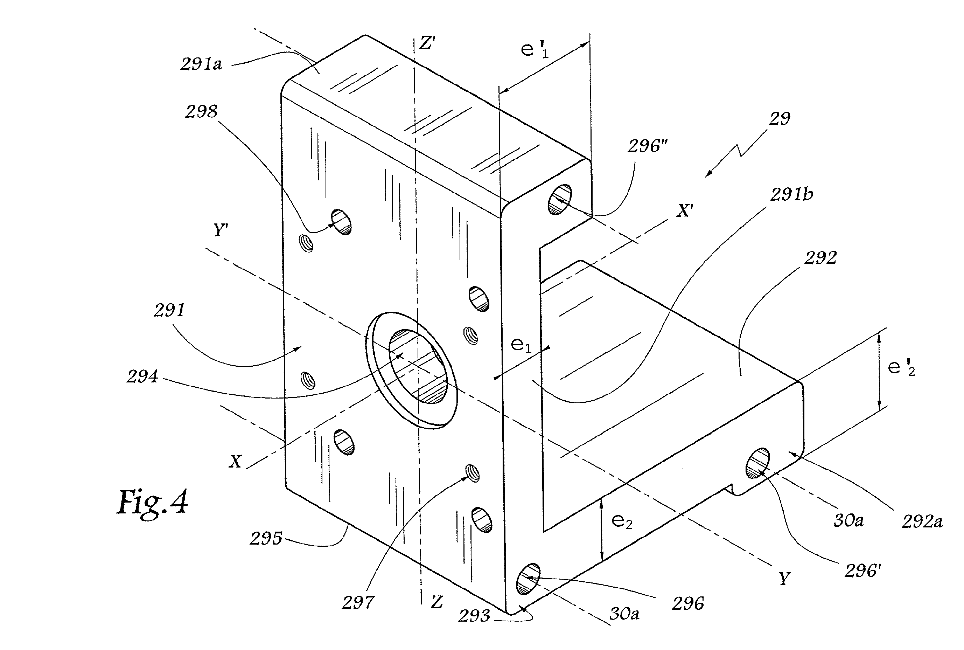

- la figure 4 est une vue en perspective d'un support appartenant au kit de la figure 3.

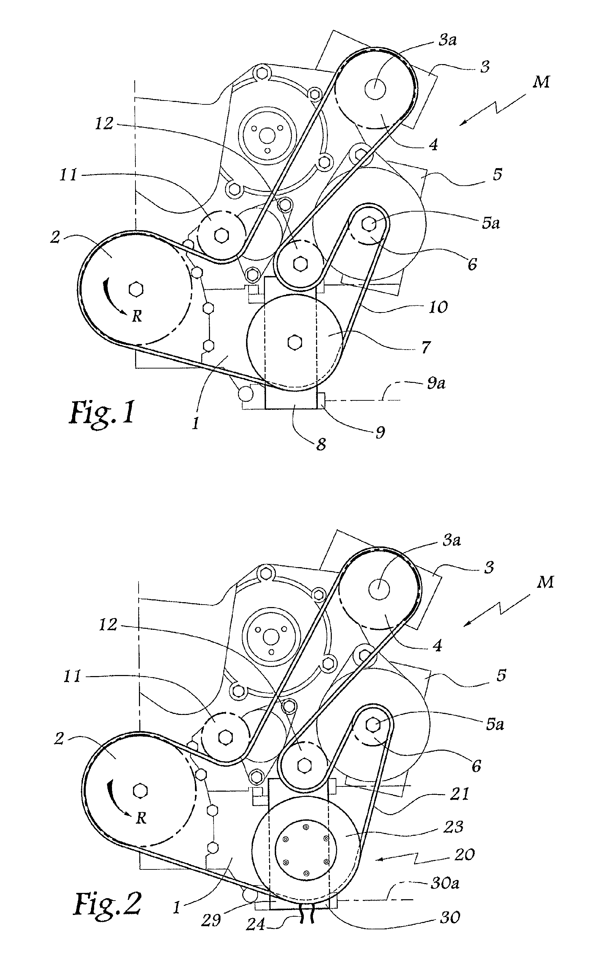

Le moteur M représenté partiellement aux figures 1 et 2 comprend un bloc moteur 1 dans lequel est monté un vilebrequin dont l'extrémité est équipée d'une poulie 2. Sur le moteur M est également prévue une pompe 3 d'assistance de direction dont l'arbre d'entrée 3a porte une poulie 4. Un alternateur 5 est également monté sur le moteur M et l'on note 6 la poulie solidaire de son arbre d'entrée 5a.

Une poulie folle 7 est montée sur le bloc 1 grâce à un support 8 de forme adaptée. Des vis 9, dont on note 9a l'axe géométrique, permettent de fixer le support 8 sur le bloc 1.

Une courroie 10 relie les poulies 2, 7, 6 et 4, ce qui permet de transmettre le mouvement de rotation R issu du vilebrequin à la pompe 3 et à l'alternateur 5. Deux galets tendeurs 11 et 12 sont également prévus et permettent d'ajuster la tension de la courroie 10.

Conformément à l'invention, un kit 20 est prévu pour être monté sur le moteur M à la place de la poulie 7 et du support 8. En fait, la poulie 7 et le support 8 sont prévus démontables sur le moteur 1 pour le cas où l'on souhaiterait équiper ce moteur d'un compresseur accessoire pour un système de climatisation. Dans la plupart des cas, les véhicules utilitaires ne sont pas équipés d'un tel compresseur. Il est donc possible d'utiliser l'emplacement de la poulie 7 sur le moteur M pour intégrer un autre dispositif qui peut être entraîné par le mouvement de rotation R de la poulie 2 grâce à une courroie 21 jouant le rôle de la courroie 10.

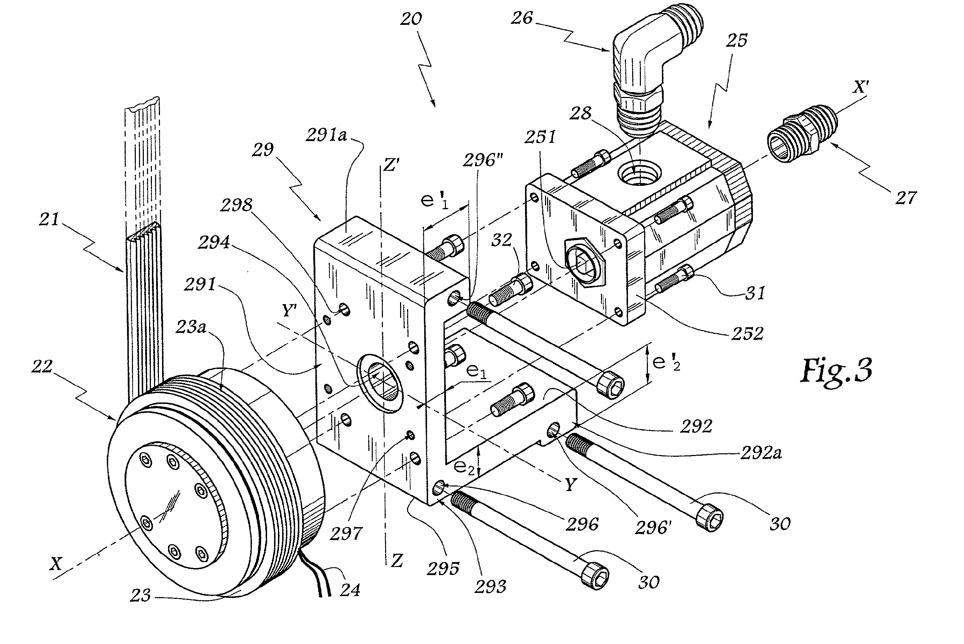

Le kit 20 est plus particulièrement visible à la figure 3. Il comprend un embrayage électromagnétique 22 pourvu d'une poulie 23 et commandé, par une unité non représentée, au moyen d'une paire de fils conducteurs 24.

Le kit 20 comprend également une pompe hydraulique 25 équipée d'un raccord d'entrée 26 et d'un raccord de sortie 27 destinés à être montés respectivement sur un orifice d'entrée 28 et sur un orifice de sortie non représenté de la pompe 25.

Le kit 20 comprend également un support 29 à section globalement en forme de L sur lequel sont montés l'embrayage 22 et la pompe 25. Ce support 29 comprend un premier bras 291 et un second bras 292 globalement perpendiculaires l'un par rapport à l'autre et se rejoignant dans une zone de jonction 293.

Une ouverture 294 est prévue dans le bras 291 et permet de relier l'arbre de sortie non représenté de l'embrayage 22 à l'arbre d'entrée 251 de la pompe 25.

On note X-X' l'axe longitudinal commun des arbres de l'embrayage et de la pompe lorsque ces éléments sont montés sur le support 29.

On note Y-Y' un axe perpendiculaire à l'axe X-X' et parallèle à l'arête 295 de jonction entre les surfaces extérieures respectives des bras 291 et 292. On note enfin Z-Z' un axe perpendiculaire aux axes X-X' et Y-Y'.

Le bras 291 est globalement plan et parallèle à un plan défini par les axes Y-Y' et Z-Z'.

Le bras 292 est globalement plan et parallèle à un plan défini par les axes X-X' et Y-Y'.

Le bras 292 est pourvu de perçages 296 et 296' s'étendant chacun selon une direction globalement parallèle à l'axe Y-Y'. En d'autres termes, les perçages 296 et 296' s'étendent dans l'épaisseur du bras 292. Le perçage 296 est formé dans la zone 293 de jonction entre les bras 291 et 292, alors que le perçage 296' est formé dans une partie d'extrémité 292a du bras 292 qui présente une épaisseur e'₂ supérieure à l'épaisseur e₂ du bras 292 dans sa partie principale 292b.

Le bras 291 est pourvu d'un retour 291a constituant également son extrémité et dont l'épaisseur e'₁ est supérieure à l'épaisseur e₁ du bras 291 dans sa partie principale 291b. Au niveau de son retour 291a, le bras 291 est pourvu d'un perçage 296'' globalement parallèle aux perçages 296 et 296'.

Les perçages 296, 296' et 296'' permettent le passage de vis 30 de fixation du support 29 sur le bloc moteur 1. Le fait que les perçages 296, 296' et 296'' sont ménagés dans l'épaisseur du support 29 confère une très bonne rigidité à l'assemblage obtenu grâce aux vis 30.

Le bras 291 est également pourvu de taraudages 297 de réception de vis 31 permettant d'immobiliser une platine d'extrémité 252 de la pompe 25 sur un côté du bras 291.

Par ailleurs, des perçages 298 permettent de faire traverser le bras 291 à des vis 32 de fixation de l'embrayage 22 sur le bras 291. Le support 29 est conçu de telle sorte que l'embrayage 22 est monté sur un côté du bras 291 alors que la pompe 25 est montée de l'autre côté de ce bras.

Au vu de ce qui précède, il est aisé de monter le kit 20 sur le moteur M comme représenté sur la figure 2, en vissant les vis 30 en lieu et place des vis 9 représentées à la figure 1. Comme précédemment, on a référencé 30a l'axe de ces vis à la figure 2.

La poulie 23 de l'embrayage 22 a une surface radiale externe comprenant un certain nombre de gorges en V 23a, alors que la courroie 21 a une surface interne avec un profil correspondant dit « poly V ».

La longueur de la courroie 21 est supérieure à celle de la courroie 10 car le diamètre de la poulie 23 est, en pratique, supérieur à celui de la poulie 7. En fait, la longueur de la courroie 21 est déterminée en fonction du diamètre de la poulie 23, les autres éléments de la chaîne cinématique représentés à la figure 2 demeurant identiques à ceux de la figure 1. Il est donc possible que, dans certaines utilisations, la courroie 21 soit plus courte que la courroie d'origine 10.

Le fait que les câbles 24 sont disposés à proximité de l'arête 295 du support 29 limite les risques d'arrachement de ces câbles par interférence avec d'autres parties constitutives du moteur M.

L'invention décrite est particulièrement adaptée aux moteurs commercialisés sur les véhicules de marques Renault, Opel ou Général Motors sous la référence G9T. Bien entendu, l'invention peut être utilisée avec des moteurs et/ou des véhicules d'autres marques.

## Revendications

1. Kit (20) formant source de puissance hydraulique apte à être monté sur un moteur de véhicule automobile comprenant :
- un support (29) à section globalement en forme de L apte à être monté sur ledit moteur (M) à la place d'un support (8) de poulie folle (7) ;
- un embrayage électro-magnétique (22) monté sur ledit support et
- une pompe hydraulique (25) montée sur ledit support et accouplée audit embrayage à travers une ouverture (294) ménagée dans un bras (291) dudit support.

2. Kit selon la revendication 1, **caractérisé en ce que** ledit embrayage est pourvu d'une poulie (23) à profil en V multiple (23a) apte à coopérer avec une courroie (21) à profil dit « poly V ».

3. Kit selon l'une des revendications précédentes, **caractérisé en ce que** ledit support comprend un premier bras (291) dans lequel est ménagée ladite ouverture (294) et un second bras (292), globalement perpendiculaire au premier, dans l'épaisseur duquel sont ménagés des perçages (296, 296') de passage de vis (30) de fixation dudit support (29) sur ledit moteur (1, M).

4. Kit selon la revendication 3, **caractérisé en ce qu'**un premier perçage (296) est ménagé dans une zone (293) de jonction entre lesdits premier (291) et second (292), bras, alors que le second perçage (296') est ménagé dans une zone d'extrémité (292a) dudit second bras (292).

5. Kit selon la revendication 3, **caractérisé en ce qu'**un perçage (296'')de passage d'une autre vis de fixation (30) est ménagé dans une zone d'extrémité (291a) dudit premier bras (291).

6. Kit selon l'une des revendications 4 ou 5,
**caractérisé en ce que** ladite zone d'extrémité (291a, 292a) a une épaisseur (e'₁, e'₂) supérieure à celle (e₁, e₂) dudit bras (291, 291) dans sa partie principale (291b, 292b).

7. Kit selon l'une des revendications précédentes, **caractérisé en ce que** ledit support (29) est percé de taraudages (297) de réception de vis (31) de montage de ladite pompe (25) et de perçages (298) de passage de vis (32) de montage dudit embrayage (22).

8. Kit selon l'une des revendications précédentes, **caractérisé en ce que** ledit embrayage (22) est monté sur ledit support (29), de telle sorte que ses câbles (24) d'alimentation électrique passent au voisinage d'une zone de jonction (23) entre deux bras (291, 292) dudit support.

9. Kit selon l'une des revendications précédentes, **caractérisé en ce qu'**il comprend une courroie (21) d'entraînement d'une poulie (23) dudit embrayage (22) apte à être montée à la place d'une courroie de transmission (10) dudit moteur (M).

10. Moteur de véhicule automobile (M), notamment de véhicule utilitaire léger, **caractérisé en ce qu'**il est équipé d'un kit (20) formant source de puissance hydraulique selon l'une des revendications précédentes.
